# EUROPÄISCHE PATENTSCHRIFT

(11) **EP 0 600 922 B1**
(45) Veröffentlichungstag und Bekanntmachung des Hinweises auf die Patenterteilung: **25.09.1996**
(21) Anmeldenummer: 92916019.0
(22) Anmeldetag: 17.07.1992
(51) Int. Cl.: D06F 39/02, A47L 15/44, B65G 53/42

(54) **VORRICHTUNG ZUM ANSETZEN EINER STAMMLAUGE**
DEVICE FOR PREPARING A STOCK WASHING LIQUOR
DISPOSITIF DE PREPARATION D'UNE LESSIVE DE BASE

(30) Priorität: 26.07.1991 DE 4124881
(43) Veröffentlichungstag der Anmeldung: 15.06.1994
(73) Patentinhaber: Henkel Kommanditgesellschaft auf Aktien, 40191 Düsseldorf (DE)
(72) Erfinder: RINGS, Friedel, D-4019 Monheim 2 (DE); HOLZ, Peter, D-4000 Düsseldorf (DE)
(86) Internationale Anmeldenummer: EP9201631
(87) Internationale Veröffentlichungsnummer: WO9303217

(56) Entgegenhaltungen:
- WO-A-88/02503
- WO-A-89/00021
- US-A- 3 188 146
- US-A- 3 570 717
- US-A- 3 951 462
- US-A- 4 020 865

## Beschreibung

Die Erfindung richtet sich auf eine Vorrichtung nach Art üblicher Naß-Staubsauger (siehe z.B. WO-A-8 900 021), bestehend aus einem ein bottichförmiges Unterteil und ein darauf abdichtend aufgesetztes Oberteil mit integriertem Sauggebläse zur Erzeugung eines Unterdrucks in dem Unterteil aufweisenden Stammlaugenbehälter mit aus dem Stammlaugenbehälter herausführender und in ein Pulvergebinde einzuführender Sauleitung.

Es ist bekannt, zur Versorgung gewerblicher Spül- oder Waschmaschinen mit Reinigerlösung einen Stammlaugenbehälter vorzusehen, der die Reinigerlösung enthält. Aus diesem Stammlaugenbehälter wird die Reinigerlösung nach Bedarf in die jeweils angeschlossene Spül- oder Waschmaschine gepumpt. Zur Herstellung der die Reinigerlösung bildenden Stammlauge aus einem Pulver bzw. pulverförmigen Reinigungsmittel ist dem Stammlaugenbehälter ein Dosiergerät zugeordnet. Das Pulver wird aus einem Pulvergebinde in das Dosiergerät geschüttet oder das gesamte Pulvergebinde wird in das Dosiergerät eingesetzt und aufgeschlitzt. Aus dem Dosiergerät wird chargenweise pulverförmiges Reinigungsmittel in eine Einspülrinne abgegeben, in welcher es sich mit zufließendem Wasser zu der die Reinigerlösung für die Spül- oder Waschmaschine bildenden Stammlauge vermischt. Die Stammlauge wird dann direkt in den Stammlaugenbehälter geleitet. Aus dem Stammlaugenbehälter wird die Reinigerlösung den Erfordernissen des jeweiligen Spül- oder Waschprozesses entsprechend abgezogen.

Die Befüllung des Dosiergerätes mit dem pulverförmigen Reinigungsmittel ist nicht unproblematisch. Sie ist häufig mit einer Staubentwicklung verbunden, die insbesondere bei üblicherweise stark alkalischen Reinigungspulvern für Spülprozesse für das Bedienungspersonal unangenehm und gesundheitsgefährdend ist. Sowohl beim Einsetzen von Pulvergebinden in das Dosiergerät als auch beim Einschütten oder Einschaufeln von Pulver aus dem Gebinde in das Dosiergerät kann es zu einer unerwünschten Staubentwicklung kommen.

Das Fassungsvermögen bekannter Dosiergeräte für die Versorgung bekannter Stammlaugenbehälter mit pulverförmigem Reinigungsmittel liegt üblicherweise bei 5 kg, so daß in diese Dosiergeräte auch nur 5 kg-Pulvergebinde einzustellen sind. Des weiteren erfolgt die Pulverabgabe aus diesen Dosiergeräten und die Zuleitung des Pulver/Wasser-Gemisches zum Stammlaugenbehälter üblicherweise unter Ausnutzung der Schwerkraft. Deshalb sind diese Geräte üblicherweise oberhalb eines Stammlaugenbehälters angeordnet. Dies verhindert eine beliebige Vergrößerung des Fassungsvermögens der Dosiergeräte, wenn nicht auf statisch und konstruktiv aufwendige Halterungen für das Dosiergerät zurückgegriffen werden soll.

Übliche Stammlaugenbehälter sind tank- oder kanisterförmig ausgebildet und weisen eine Zulaufleitung für die mit Hilfe eines Dosiergerätes angesetzte Stammlauge und eine Ablaufleitung zur Abgabe der Stammlauge aus dem Stammlaugenbehälter an gewerbliche Spül- oder Waschmaschinen auf.

Aufgabe der Erfindung ist es, eine Lösung zu schaffen, die das Ansetzen einer Stammlauge direkt aus dem pulverförmiges Reinigungsmittel enthaltenden Pulvergebinde unter Vermeidung einer Staubentwicklung und die Bereitstellung der Stammlauge zur Versorgung gewerblicher Spül- oder Waschmaschinen ermöglicht.

Bei einer Vorrichtung der eingangs bezeichneten Art wird diese Aufgabe gemäß der Erfindung dadurch gelöst, daß die stammlaugenbehälterinnenseitige Mündungsöffnung der Saugleitung mit Abstand vom Eintrittsort der Saugleitung in das Unterteil angeordnet ist, daß in den Stammlaugenbehälter eine Frischwasserleitung mündet, deren Wasseraustrittsöffnung auf einen durch die Saugleitung zu führenden Pulverstrom gerichtet ist und daß der Stammlaugenbehälter eine weitere, mit einer Pumpe in Wirkverbindung stehende und aus dem Stammlaugenbehälter herausführende Stammlaugenleitung mit behälterbodenseitigem Stammlaugenzufluß zum Abpumpen der Stammlauge aus dem Unterteil aufweist.

Mit der erfindungsgemäßen Vorrichtung ist es möglich, pulverförmiges Reinigungsmittel direkt aus dem Pulvergebinde, das auch das Verkaufsgebinde ist, staubfrei in den Stammlaugenbehälter zu fördern. In dem Stammlaugenbehälter wird dem durch die Saugleitung angesaugten Pulverstrahl Wasser aus einer Frischwasserleitung zugesetzt und damit die die Reinigerlösung für gewerbliche Spül- oder Waschmaschinen bildende Stammlauge angesetzt. Die Zubereitung einer Stammlauge aus pulverförmigem Reinigungsmittel und die Versorgung gewerblicher Spül- oder Waschmaschinen mit dieser Stammlauge wird in ihrer Handhabung somit genauso einfach und sicher wie die Dosierung von flüssigem Reinigungsmittel. Das Umfüllen von pulverförmigem Reinigungsmittel aus dem Pulvergebinde in ein Dosiergerät, beispielsweise durch Umschütten oder durch Aus- und Einschaufeln, ist nicht mehr notwendig.

Gegenüber den vorbekannten Dosiergeräten kann die vorlegbare Pulvermenge erheblich vergrößert werden. Anstelle einer üblichen 5 kg-Vorlagemenge kann direkt aus großen Pulvergebinden, beispielsweise Säcken mit 25 kg oder sogar 200 kg Pulverfassungsvermögen, Pulver entnommen werden. Dadurch ergibt sich der weitere Vorteil, daß die erfindungsgemäße Vorrichtung die Kapazität bietet, um als zentrale Einheit in Form einer Pulverdosierzentrale mehrere Spül- oder Waschmaschinen mit Stammlauge versorgen können.

Durch die Stammlaugenleitung hindurch kann die Stammlauge aus dem Stammlaugenbehälter herausgepumpt werden. Hierzu ist die Stammlaugenleitung vorgesehen, die mit einer Pumpe in Wirkverbindung steht.

Um zu erreichen, daß das durch die Saugleitung in den Stammlaugenbehälter angesaugte und dort aus der Saugleitung austretende Pulver sich beim Auftreffen des Wasserstrahles aus der Frischwasserleitung nicht an der behälterinnenseitigen Wand des Unterteiles niederschlägt, ist die stammlaugenbehälterinnenseitige Mündungsöffnung der Saugleitung mit Abstand vom Eintrittsort der Saugleitung in das Unterteil angeordnet.

In Ausgestaltung sieht die Erfindung hierbei vor, daß die stammlaugenbehälterinnenseitige Mündungsöffnung der Saugleitung unterhalb des Eintrittsortes der Saugleitung in das Unterteil und die stammlaugenbehälterinnenseitige Mündungsöffnung der Frischwasserleitung ebenfalls unterhalb des Eintrittsorts der Saugleitung und/oder außerhalb der Saugleitung angeordnet ist. Dies ist zweckmäßig, um beim Nachlaufen von Frischwasser, insbesondere nach abgestelltem Sauggebläse, zu verhindern, daß Wasser in die Saugleitung eindringt und beispielsweise durch die Saugleitung hindurch aus dem Stammlaugenbehälter austritt. Durch die Höhendifferenz von Eintrittsort und Mündungsöffnung der Saugleitung und/oder die Trennung von Wasser- und Pulvereintritt wird ein Zurückfließen des Frischwassers entgegen der Schwerkraft verhindert.

Von besonderem Vorteil ist es hierbei gemäß Weiterbildung der Erfindung, wenn die Saugleitung in stammlaugenbehälterinnenseitiger Verlängerung einen zum Behälterboden nach unten gerichteten Bogen oder Krümmer aufweist.

Eine besonders gute Vermischung von angesaugtem Pulver und zugeführtem Frischwasser ergibt sich nach weiterer Ausgestaltung der Erfindung dann, wenn die Frischwasserleitung in stammlaugenbehälterinnenseitiger Verlängerung mit in Richtung zum Behälterboden ausgerichteter Austrittsöffnung in den Bogen mündet und sich die Saugleitung an den Bogen anschließend bis nahe an die Innenwand des Unterteils fortsetzt. Dies stellt auch eine weitere, das Zurückfließen des in die Saugleitung eingeleiteten Frischwassers verhindernde Maßnahme dar. Weiterhin wird dadurch, daß sich die Saugleitung im Anschluß an den Bogen bis nahe an die Innenwand des Unterteils fortsetzt, erreicht, daß dort das Gemisch aus Pulver und Wasser gegen die Innenwand prallt, was zu einer mechanischen Beanspruchung der Pulverkörner und deren Zerplatzen führt und somit die Auflösung der Pulverkörner in der angesetzten Stammlauge beschleunigt.

Bei einer anderen Ausführungsform in Weiterbildung der Erfindung endet die Saugleitung in stammlaugenbehälterinnenseitiger Verlängerung in dem Bogen in der Längsachse des Unterteiles mit zum Behälterboden ausgerichteter Mündungsöffnung und ist die Frischwasserleitung in stammlaugenbehälterinnenseitiger Verlängerung oberhalb der Mündungsöffnung als die Mündungsöffnung konzentrisch umgebende und aus vorzugsweise vier unter einem Neigungswinkel von vorzugsweise 45° bei einer Flachstrahlauffächerung von vorzugsweise 65° aus Düsen einen auf den aus der Saugleitung austretenden Pulverstrahl gerichteten Wasserstrahl abgebende Ringleitung ausgebildet. Auch bei dieser Ausführungsform ist das aus der Saugleitung austretende Pulver gut zu der Stammlauge aufzubereiten.

Um zu verhindern, daß zu grobe, noch nicht aufgelöste Pulverkörner in die Stammlaugenleitung gelangen, sieht die Erfindung weiterhin vor, daß unterhalb der stammlaugenbehälterinnenseitigen Mündungsöffnung der Saugleitung ein Siebboden in dem Unterteil angeordnet ist.

Für das Abpumpen der Stammlauge aus dem Stammlaugenbehälter ist es zweckmäßig und von Vorteil, wenn in dem Unterteil eine Tauchpumpe mit behälterbodenseitig unterhalb des Siebbodens ausgebildeter Ansaugöffnung und mit mit der Stammlaugenleitung in Verbindung stehender druckseitiger Abgabeöffnung angeordnet ist, wie dies die Erfindung ebenfalls vorsieht. Hierdurch ist in einfacher Weise eine Pumpe zur Versorgung gewerblicher Spül- oder Waschmaschinen mit in dem Stammlaugenbehälter aufbereiteter Stammlauge in dem Stammlaugenbehälter platzsparend zu integrieren.

Um eine Verwirbelung von sich auf dem Siebboden abgesetzt habenden und noch nicht aufgelösten Pulverkörnern zu erreichen, ist gemäß weiterer Ausgestaltung der Erfindung vorgesehen, daß die Stammlaugenleitung Abzweigungen innerhalb des Unterteiles aufweist, deren Mündungsöffnungen oberseitig auf den Siebboden gerichtet sind.

Bei einer anderen Ausführungsform sieht die Erfindung vor, daß außerhalb des Stammlaugenbehälters in der Stammlaugenleitung zumindest eine Pumpe, vorzugsweise eine Membran- oder Schlauchquetschpumpe, angeordnet ist.

Anstelle oder zusätzlich zu den Abzweigungen der Stammlaugenleitung kann zur Verwirbelung von auf dem Siebboden niedergeschlagenen Pulverkörnern in Ausgestaltung der Erfindung auch vorgesehen sein, daß in dem Stammlaugenbehälter oberhalb des Siebbodens ein Rührpropeller oder Rührstab rotierbar angeordnet ist.

In Weiterbildung der Erfindung ist vorgesehen, daß das Unterteil bodenseitig einen Ablaßstutzen mit angeschlossener Stammlaugenleitung aufweist. Dies ist insbesondere dann zweckmäßig, wenn zur dosierten Abgabe von Stammlauge an gewerbliche Spül- oder Waschmaschinen eine Membran oder- Schlauchquetschpumpe außerhalb des Stammlaugenbehälters in der Stammlaugenleitung angeordnet ist.

Für die Versorung mehrerer gewerblicher Spül- oder Waschmaschinen mit Stammlauge aus der erfindungsgemäßen Vorrichtung heraus ist die Erfindung weiterhin dadurch gekennzeichnet, daß die Stammlaugenleitung außerhalb des Stammlaugenbehälters Abzweigungen zur Versorgung mehrerer Spül- oder Waschmaschinen aufweist.

Um zu verhindern, daß die Füllstandshöhe innerhalb des Stammlaugenbehälters entweder soweit ansteigt, daß Stammlauge in die Saugleitung eindringen kann oder soweit abfällt, daß die Ansaugöffnung der Tauchpumpe trockenliegt oder die Stammlaugenleitung bis in den Bereich einer darin angeordneten Pumpe trockenläuft, ist gemäß Weiterbildung der Erfindung vorgesehen, daß an der Innenwand des Unterteils zwei Füllstandskontrollelektroden angeordnet sind.

Verfahrbar und mobil wird der Stammlaugenbehälter dann, wenn der Stammlaugenbehälter auf einem Räder und einen Handgriff aufweisenden rollbaren Gestell in Form einer Handkarre oder eines Handwagens angeordnet ist, wie dies die Erfindung ebenfalls vorsieht.

Zur Vervollständigung der mobilen und verfahrbaren Einheit ist es dann gemäß weiterer Ausgestaltung der Erfindung besonders zweckmäßig, wenn auf dem rollbaren Gestell auch eine Netzkopplungseinrichtung und elektrische Schalteinrichtungen angeordnet sind.

Zweckmäßig ist es auch, auf dem Gestell die zumindest eine Pumpe anzuordnen, wenn diese außerhalb des Stammlaugenbehälters in der Stammlaugenleitung angeordnet ist.

Für die Handhabung der Saugleitung sieht die Erfindung in weiterer Ausgestaltung in vorteilhafter Weise vor, daß die Saugleitung flexibel, insbesondere als Schlauch, ausgebildet ist.

Um ein gleichmäßiges und störungsfreies Ansaugen von Pulver aus einem Pulvergebinde heraus in die Saugleitung zu erreichen, ist die Erfindung gemäß weiterer Ausgestaltung dadurch gekennzeichnet, daß die Saugleitung auf der stammlaugenbehälterabgewandten Seite in einem in das Pulvergebinde einzutauchenden Saugrohr endet, welches von einem einen Ringspalt zum Saugrohr ausbildenden Mantelrohr umgeben ist, welche zusammen eine saugöffnungsseitig in einer Ringdüse endende Sauglanze ausbilden.

Hierbei ist es zur Schaffung eines Wirbelraumes vor dem behälterinnenseitigen Ende der Sauglanze besonders zweckmäßig, wenn die Sauglanze saugöffnungsseitig einen über das Ende des Saugrohres überstehenden käfigartigen Schutzkorb aufweist, wie dies die Erfindung auch vorsieht.

Schließlich ist die Erfindung in weiterer Ausgestaltung dadurch gekennzeichnet, daß das Saugrohr innenseitig an seinem unteren Ende einen Strömungswiderstandskörper aufweist. Hierdurch läßt sich die angesaugte Pulvermenge regulieren.

Die Erfindung ist nachstehend anhand der Zeichnung beispielsweise näher erläutert.

Diese zeigt in
- Fig. 1: eine erste Ausführungsform der erfindungsgemäßen Vorrichtung in Seitenansicht,
- Fig. 2: ein in einen trog-oder eimerförmigen Behälter eingestelltes Pulvergebinde mit eingetauchter Sauglanze,
- Fig. 3: ein Ende der Sauglanze,
- Fig. 4: in vergrößerter Schnittdarstellung das Ende der Sauglanze nach Fig. 3,
- Fig. 5: in schematischer Darstellung einen Blick in das Unterteil des Stammlaugenbehälters gemäß Ausführungsbeispiel nach Fig. 1,
- Fig. 6: ein weiteres Ausführungsbeispiel der erfindungsgemäßen Vorrichtung in Seitenansicht und in
- Fig. 7: in schematischer Darstellung einen Blick in das Unterteil des Stammlaugenbehälters gemäß Ausführungsbeispiel nach Fig. 6.

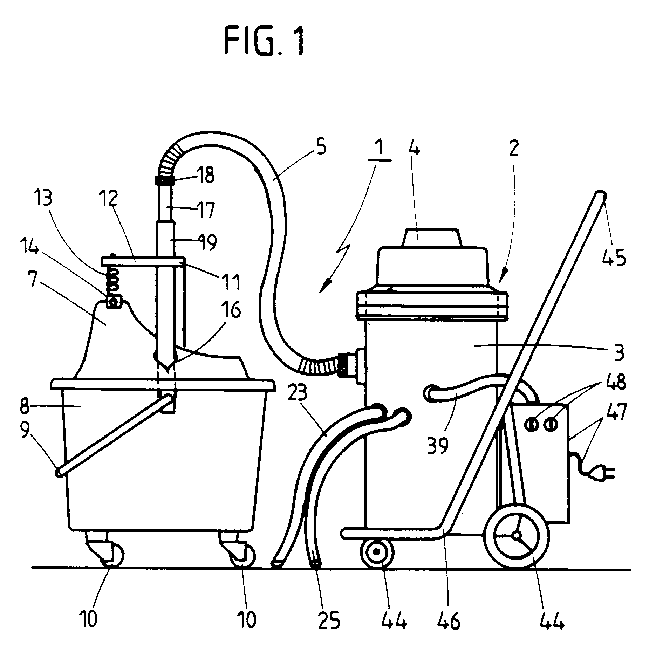

Die in der Fig. 1 insgesamt mit 1 bezeichnete Vorrichtung zur Ansetzung und Bereitstellung einer Stammlauge direkt aus einem Pulvergebinde zur Versorgung gewerblicher Spül- oder Waschmaschinen besteht aus einem Stammlaugenbehälter 2, der nach Art eines üblichen Naß-Staubsaugers ausgebildet ist. Der Stammlaugenbehälter 2 weist ein bottichförmiges Unterteil 3 und ein abdichtend auf dessen oberen Rand aufgesetztes Oberteil 4 mit (nicht dargestelltem) integriertem Sauggebläse zur Erzeugung eines Unterdrukkes in dem Unterteil 3 auf. In das Unterteil 3 des Stammlaugenbehälters 2 führt eine Saugleitung 5 hinein, die mit ihrem behälterabgewandten Ende in in einem als Sack ausgebildeten Pulvergebinde 7 befindliches pulverförmiges Reinigungsmittel 6 eintaucht. Bei dem Pulvergebinde handelt es sich um das Verkaufsgebinde, mit welchem das Pulver 6 vertrieben wird. Das Pulvergebinde 7 in Form eines Sackes ist in einen trog- oder eimerförmigen Behälter 8 eingestellt. Der trog- oder eimerförmige Behälter 8 weist einen verschwenkbar gelagerten Tragegriff 9 und bodenseitig vier Rollen 10 auf, so daß der Behälter 8 auch bei eingestelltem Pulvergebinde 7 verfahrbar ist. An einer Seite des Behälters 8 ist ein galgenförmiges oder -artiges Gestell 11 befestigt. Im Bereich seines Galgens weist das Gestell 11 einen Tragarm 12 auf, an welchem mittels einer Zugfeder 13 ein Halteelement 14 hängend befestigt ist. Das Halteelement 14 ist seinerseits im Bereich einer oberseitigen Eckkante des sackförmigen Pulvergebindes 7 befestigt. Der Tragarm 12 und das daran befestigte Halteelement 14 sind in einer solchen Höhe am Gestell 11 angeordnet, daß das Pulvergebinde 7 von dem Halteelement 14 erfaßt bei noch vollständig mit Pulver 6 befülltem Pulvergebinde 7 in aufgerichteter Position gehalten ist. Hierbei ist die Zugfeder 13 zumindest teilweise gedehnt, so daß sie unter Zugspannung steht und von ihr eine Zugkraft ausgeht. Bei teilweiser Entleerung des Sackes 7 wird dieser aufgrund der Zugkraft der Feder 13 von dem Halteelement 14 angehoben, so daß der Sack 7 in eine Schräglage gelangt, und der tiefste Punkt innerhalb des Sackes 7 dem Angriffspunkt des Halteelementes 14 diametral gegenüberliegt. Dies führt dazu, daß sich die nachstehend noch beschriebene Sauglanze 21 bei dem ebenfalls nachstehend noch beschriebenen Absaugen des pulverförmigen Reinigungsmittels 6 aus dem Pulvergebinde 7 mit fortschreitender Entleerung des Sackes 7 in diese tiefst gelegene Ecke des Sackes 7 bewegt und somit eine selbsttätige und restproduktfreie Entleerung des Sackes 7 bewirkt wird. Weiterhin weist das Gestell 11 im Bereich seines Galgens eine Sauglanzenführung 15 auf, mit welcher die endseitig an der Saugleitung 5 angeordnete und weiter unten beschriebene Sauglanze 21 gehalten wird. Die Sauglanzenführung 15 ist in einer solchen Höhe an dem Gestell 11 angeordnet, daß die Sauglanze 21 von der Sauglanzenführung 15 lose geführt und erfaßt in einer von oben durch eine, insbesondere schlitzförmige, Öffnung 16 des Sackes 7 in das Pulver 6 eintauchenden Position gehalten ist.

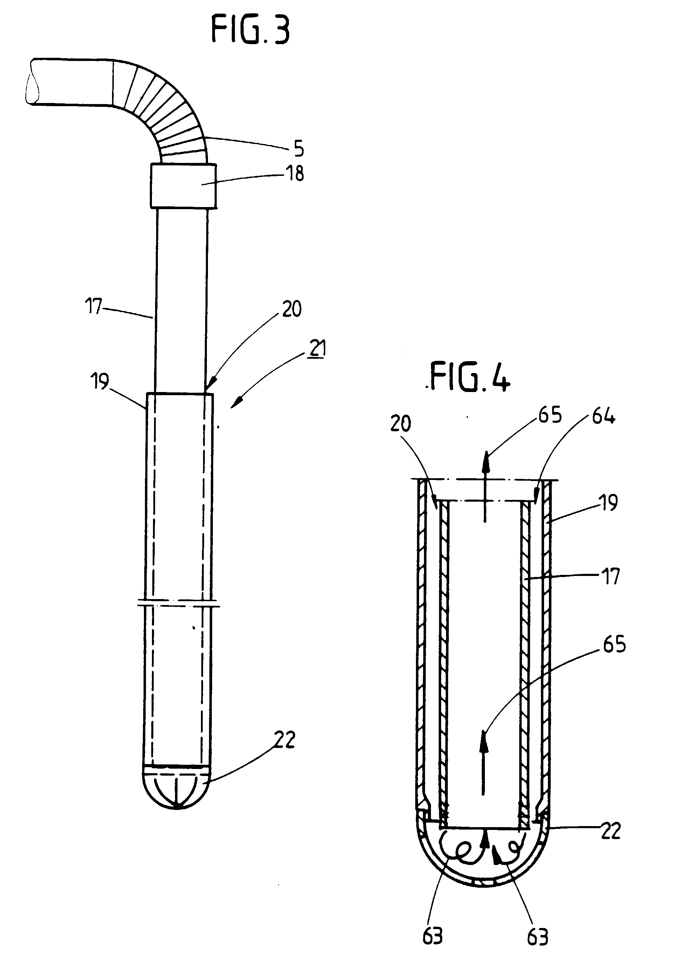

Die in das Unterteil 3 des Stammlaugenbehälters 2 hineinführende und in dem Pulvergebinde 7 in das pulverförmige Reinigungsmittel 6 eintauchend endende Saugleitung 5 ist flexibel, insbesondere als flexibler Schlauch, ausgebildet. Auf ihrer vom Stammlaugenbehälter 2 abgewandten Seite endet die Saugleitung 5 in einem angeflanschten Saugrohr 17, wie insbesondere aus der Fig. 3 ersichtlich. Auf der vom Verbindungsflansch 18 abgewandten Seite ist an dem Saugrohr 17 ein dieses umgebendes Mantelrohr 19 befestigt. Das Mantelrohr 19 weist einen Innenduchmesser auf, der größer ist als der Außendurchmesser des Saugrohres 17, so daß zwischen Außenfläche des Saugrohres 17 und Innenfläche des Mantelrohres 19 ein Ringspalt 20 ausgebildet ist. Auf der dem Flansch 18 abgewandten Seite steht das Saugrohr 17 geringfügig um ca. 10 mm über das Ende des Mantelrohres 19 über, so daß durch die endseitigen Stirnkanten von Mantelrohr 19 und Saugrohr 17 in diesem Bereich eine Ringdüse ausgebildet ist. Mantelrohr 19 und Saugrohr 17 bilden die insgesamt mit 21 bezeichnete Sauglanze. Weiterhin ist auf dem vom Flansch 18 abgewandten Ende des Mantelrohres 19 ein über das Ende von Mantelrohr 19 und Saugrohr 17 überstehender käfigartiger Schutzkorb 22 auf der Sauglanze 21 befestigt, welcher mit einzelnen, voneinander beabstandeten Stegen halbschalenförmig ausgeformt ist. Zusätzlich kann innenseitig im unteren Ende des Saugrohres 17 ein nicht dargestellter stegförmiger Strömungswiderstandskörper vorzugsweise koaxial und/oder konzentrisch zum Saugrohr 17 eingesetzt sein. Das Saugrohr 17 und das Mantelrohr 19 sind in einer solchen Länge ausgeführt, daß die Sauglanze 21, auch wenn sie sich mit ihrem von dem Schutzkorb 22 umgebenen Saugende im tiefsten Punkt des sackförmigen Pulvergebindes 7 befindet, aus dem Sack 7 herausragt. Das Saugrohr 17 ist länger ausgebildet als das Mantelrohr 19, wobei das Mantelrohr 19 mit seiner Außenseite lose in der Lanzenführung 15 geführt gehalten ist.

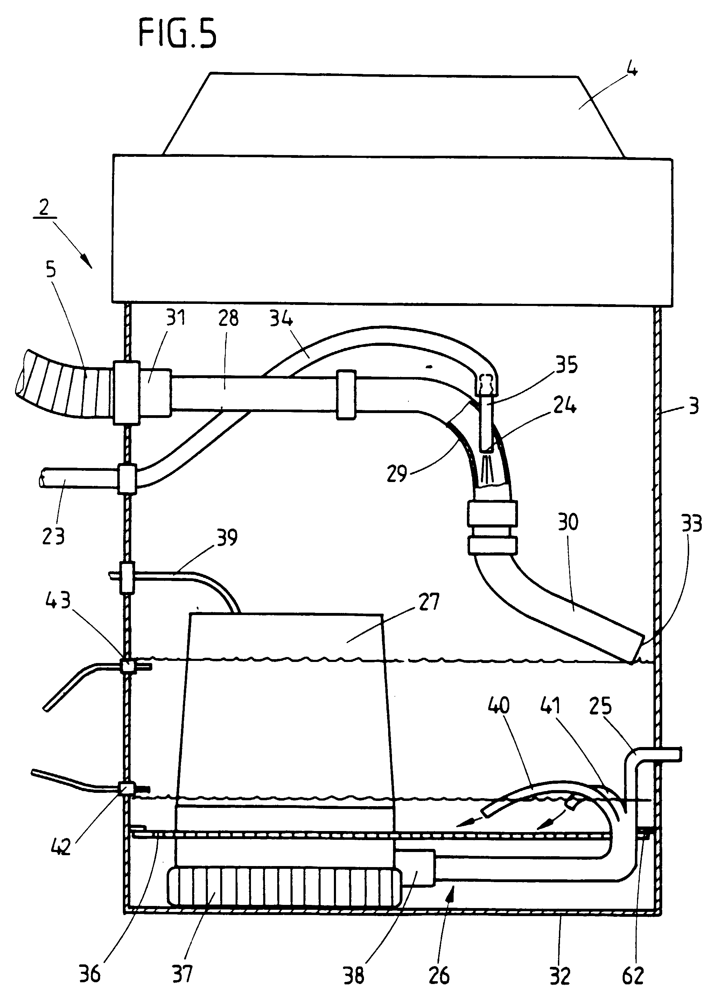

Wie aus der Fig. 5 ersichtlich, mündet außer der Saugleitung 5 in das Unterteil 3 des Stammlaugenbehälters 2 weiterhin eine Frischwasserleitung 23, deren Wasseraustrittsöffnung 24 stammlaugenbehälterinnenseitig auf einen durch die Saugleitung 5 in das Unterteil 3 zu führenden Pulverstrom gerichtet ist, und ist in dem Unterteil 3 eine aus dem Stammlaugenbehälter 2 herausführende Stammlaugenleitung 25 mit behälterbodenseitigem Stammlaugenzufluß 26 ausgebildet. Die Stammlaugenleitung 25 steht stammlaugenbehälterinnenseitig mit einer Pumpe 27 in Verbindung und führt außerhalb des Stammlaugenbehälters 2 als rohrleitungsmäßige Verbindung zu einer oder mehreren aus dem Stammlaugenbehälter 2 mit Stammlauge zu versorgenden gewerblichen Spül- oder Waschmaschinen.

Von ihrem Eintrittsort in das Unterteil 3 ausgehend ist die Saugleitung 5 innerhalb des Unterteiles 3 durch ein mittels eines Flansches 31 an die Saugleitung 5 angesetztes und dichtend in die Behälterwand des Unterteiles 3 eingesetztes Rohr 28 in das Unterteil 3 hinein verlängert. An das Rohrstück 28 schließt ein 90°-Bogen 29 oder Krümmer in Richtung auf den Behälterboden 32 zu ausgerichtet an. An den Bogen 29 ist ein weiteres bogenförmiges Rohrstück 30 angesetzt, welches mit seiner Mündungsöffnung 33 mit geringem Abstand vor der Behälterinnenwand des Unterteils 3 endet. In einer nicht dargestellten Ausführungsform weist das Rohrstück 30 im Bereich seiner Mündungsöffnung 33 einen vergrößerten freien Innenquerschnitt auf und stellt dann ein Diffuserrohr dar. Die Rohrstücke 28, 29 und 30 stellen eine stammlaugenbehälterinnenseitige Verlängerung der Saugleitung 5, durch welche hindurch Pulver in den Stammlaugenbehälter 2 angesaugt werden kann, dar. Auf diese Weise ist die stammlaugenbehälterinnenseitige Mündungsöffnung 33 der Saugleitung 5 derart ausgebildet, daß sie mit Abstand vom Eintrittsort der ersten Saugleitung 5 in das Unterteil 3 sowie unterhalb des Eintrittsortes der Saugleitung 5 in das Unterteil 3 angeordnet ist. Die Frischwasserleitung 23 ist innerhalb des Stammlaugenbehälters 2 in stammlaugenbehälterinnenseitiger Verlängerung von ihrem Eintrittsort in das Unterteil 3 bis zu dem Bogen 29 der Saugleitung 5 als Schlauch ausgebildet und mündet unter Zwischenschaltung einer tangential in den Bogen 29 eingeführten Schlauchtülle 35 mit in Richtung zum Behälterboden 32 ausgerichteter Wasseraustrittsöffnung 24.

Unterhalb der behälterinnenseitigen Mündungsöffnung 33 der Saugleitung 5 ist mit Abstand zum Behälterboden 32 ein Siebboden 36 in dem Unterteil 3 angeordnet, welcher im wesentlichen die gesamte Grundfläche des Unterteiles 3 überdeckt.

Die in dem Unterteil 3 angeordnete Pumpe ist als auf dem Behälterboden 32 aufstehende Tauchpumpe 27 ausgebildet, deren Ansaugöffnung 37 und druckseitige, mit dem Stammlaugenzufluß 26 der Stammlaugenleitung 25 in Verbindung stehende Abgabeöffnung 38 unterhalb des Siebbodens 36 angeordnet sind. Von der Tauchpumpe 27 ausgehend führt ein Elektroanschluß 39 für die energiemäßige Versorgung der Tauchpumpe 27 aus dem Unterteil 3 heraus.

Weiterhin weist die Stammlaugenleitung 25 im Bereich ihres Verlaufes innerhalb des Unterteiles 3 zwei leitungsmäßige Abzweigungen 40 und 41 auf, die mit relativ geringem Abstand oberhalb des Siebbodens 36 mit auf den Siebboden gerichteter Mündungsöffnung enden.

Schließlich sind in der Behälterwand des Unterteiles 3 in geringfügigem Abstand zur Oberseite des Siebbodens 36 eine untere Füllstandskontrollelektrode 42 und oberhalb dieser eine obere Füllstandskontrollelektrode 43 angeordnet.

Der Stammlaugenbehälter 2 ist auf einem Räder 44 und einen Handgriff 45 aufweisenden rollbaren Gestell 46 in Form einer Handkarre oder eines Handwagens angeordnet. Auf dem rollbaren Gestell 46 sind weiterhin eine Netzkopplungseinrichtung 47 und elektrische Schalteinrichtungen 48 befestigt.

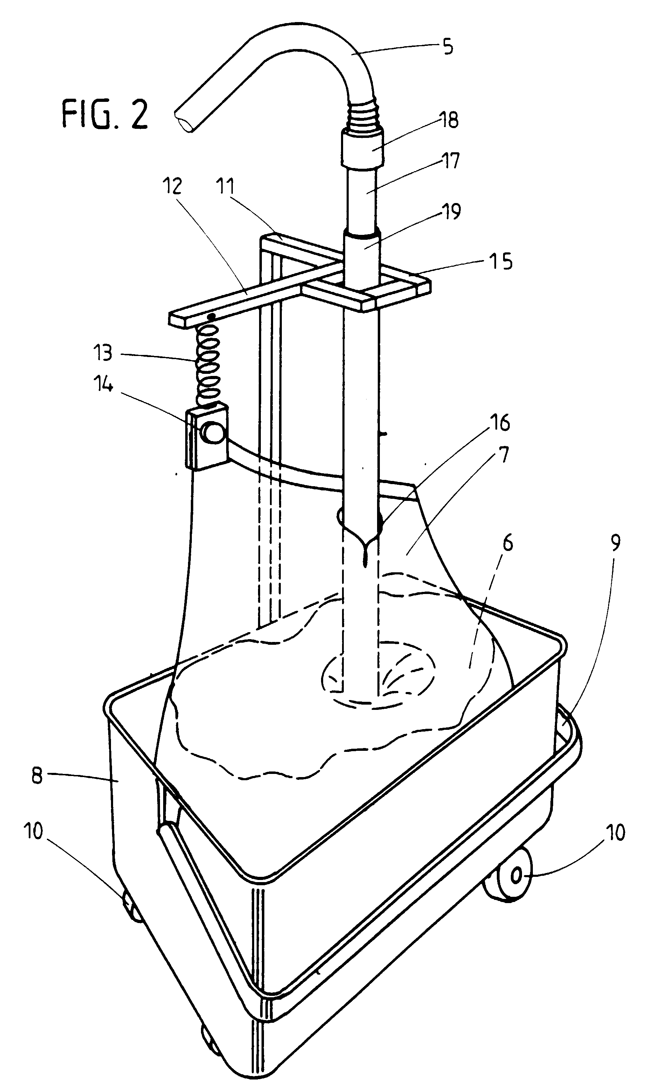

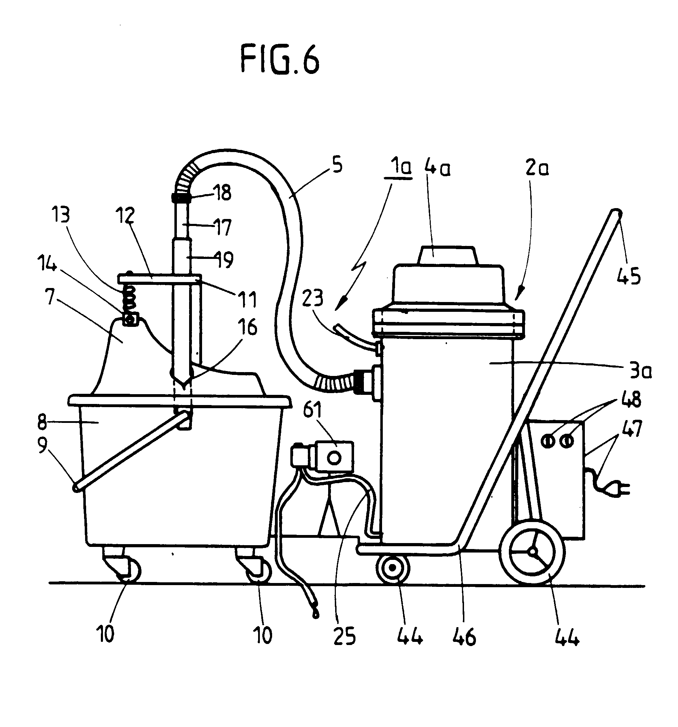

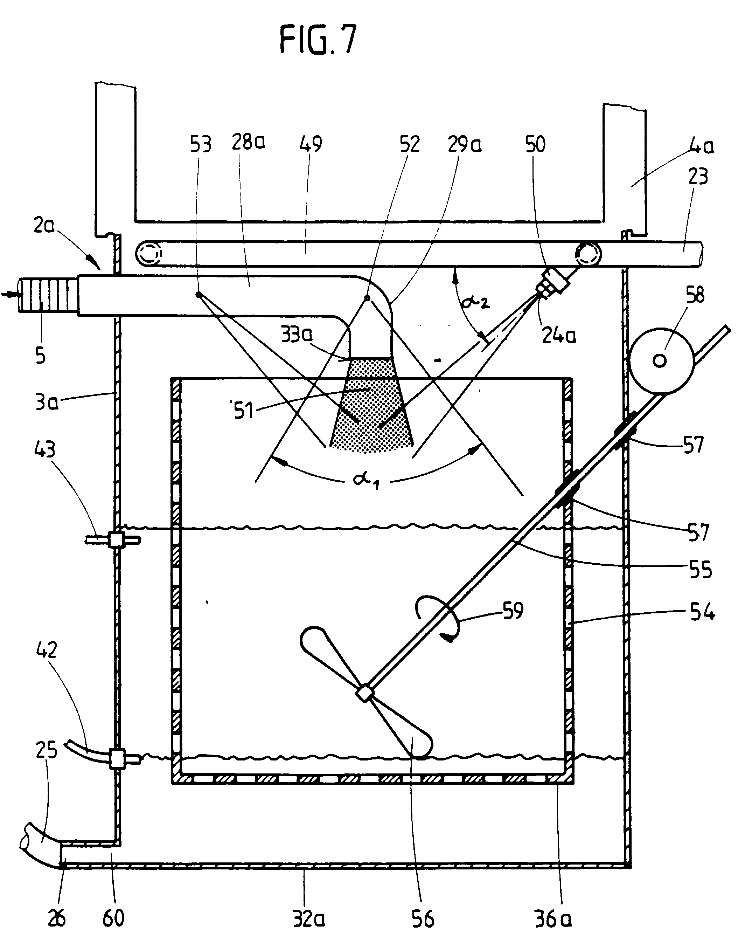

Ein weiteres Ausführungsbeispiel einer insgesamt mit la bezeichneten Vorrichtung zur Ansetzung und Bereitstellung einer Stammlauge direkt aus einem Pulvergebinde zur Versorgung gewerblicher Spül- oder Waschmaschinen ist aus den Fig. 6 und 7 ersichtlich. Dieses Ausführungsbeispiel unterscheidet sich im wesentlichen lediglich durch eine gegenüber dem ersten Ausführungsbeispiel unterschiedliche Anordnung verschiedener Elemente in und an dem Unterteil 3a des Stammlaugenbehälters 2a. Zu dem Ausführungsbeispiel gemäß Fig. 1 bis 5 gleiche Bestandteile sind daher in den Fig. 6 und 7 mit denselben Bezugszeichen wie vorstehend versehen.

Die Vorrichtung la besteht aus einem Stammlaugenbehälter 2a, der aus einem bottichförmigen Unterteil 3a und einem abdichtend darauf aufgesetzten Oberteil 4a mit integriertem Sauggebläse zur Erzeugung eines Unterdruckes in dem Unterteil 3a gebildet ist. Das Unterteil 3a ist schematisch aus der Fig. 7 ersichtlich. Die in das Unterteil 3a einmündende Saugleitung 5 ist von ihrem Eintrittsort in das Unterteil 3a ausgehend als gerade Rohrleitung 28a mit angeschlossenem Rohrbogen 29a bis in den Bereich der Haupt längsachse des vorzugsweise zylindrisch ausgebildeten Unterteiles 3a verlängert. Die Mündungsöffnung 33a des Rohrbogens 29a ist in der Hauptlängsachse des Stammlaugenbehälters senkrecht in Richtung zum Behälterboden 32a ausgerichtet. Oberhalb des Rohrstückes 28a und des Rohrbogens 29a ist die Frischwasserleitung 23 innerhalb des Stammlaugenbehälters 3a als die Mündungsöffnung 33a konzentrisch umgebende Ringleitung 49 ausgebildet. An der Ringleitung 49 sind vier mit ihrer Mündungsöffnung 24a auf einen aus der Mündungsöffnung 33a des Rohrbogens 29a austretenden Pulverstrahl 51 ausgerichtete Düsen 50 angeordnet. In der Fig. 7 ist eine Düse 50 dargestellt, die Austrittsmündungen weiterer Düsen sind durch Spritzkegel 52, 53 angedeutet. Die Düsen 50 sind unter einem Neigungswinkel α₂ von 45° an der Ringleitung 49 angeordnet. Die Mündungsöffnungen 24a der Düsen 50 weisen eine Flachstrahlauffächerung von vorzugsweise 65° (α₁) auf. Innerhalb des Unterteiles 3a und unterhalb der Mündungsöffnung 33a der verlängerten Saugleitung 5 ist ein Siebkorb 54 mit Siebboden 36a angeordnet. Oberhalb des Siebbodens 36a befindet sich endständig an einer Welle 55 befestigt ein Rührpropeller 56. Die Rührerwelle 55 ist in Lagern 57 geführt abgedichtet aus dem Unterteil 3a herausgeführt. Außerhalb des Unterteiles 3a ist ein Elektroantrieb 58 mit Schneckengetriebe angeordnet, das mit einem korrespondierenden Gewinde der Rührerwelle 55 in Eingriff steht, so daß die Rührerwelle 55 in Pfeilrichtung 59 rotierbar ist. Bodenseitig weist das Unterteil 3a einen Abflußstutzen 60 auf, an welchen die Stammlaugenleitung 25 angeschlossen ist. Die Stammlaugenleitung 25 führt zu einer außerhalb des Stammlaugenbehälters 2a auf dem Gestell 46 angeordneten Schlauchquetschpumpe 61. Mittels dieser Pumpe 61 ist aus dem Stammlaugenbehälter 2a Stammlauge abzusaugen und einer oder mehreren gewerblichen Spül- oder Waschmaschinen zuzuführen. Es kann hierbei auch vorgesehen sein, daß sich die Stammlaugenleitung 25 in Fließrichtung hinter dem Ablaßstutzen 60 verzweigt und entsprechend ihren Abzweigungen zu einer Mehrzahl von weiteren Pumpen geführt wird, die dann jeweils eine oder mehrere gewerbliche Spül- oder Waschmaschinen versorgen.

In nicht dargestellter Weise können das Gestell 46 und der trog- bzw. eimerförmige Behälter 8 miteinander gekoppelt sein, so daß sie als Einheit zusammen, beispielsweise vom Bedienungspersonal am Handgriff 45 erfaßt, zu verschieben sind.

Zur Ansetzung und Bereitstellung einer Stammlauge direkt aus dem Pulvergebinde 7 zur Versorung gewerblicher Spül- oder Waschmaschinen mit den erfindungsgemäßen Vorrichtungen 1 und la wird wie nachfolgend beschrieben verfahren.

Das pulverförmige Reinigungsmittel 6 wird über die aus Mantelrohr 19 und Saugrohr 17 bestehende Sauglanze 21 durch die Saugleitung 5 hindurch in das Unterteil 3 bzw. 3a gesaugt. Der hierzu notwendige Unterdruck wird durch das in dem Oberteil 4 bzw. 4a integriert angeordnete Sauggebläse erzeugt. Das angesaugte Pulver 6 wird bei der Vorrichtung 1 in dem Rohrbogen 29 mit aus der Mündungsöffnung 24 der verlängerten Frischwasserleitung 23 austretendem Wasser vermischt und tritt aus der Mündungsöffnung 33 in das Unterteil 3 aus. Diese Mischung aus Pulverreiniger und Wasser stellt nach Auflösung des Pulvers die Stammlauge dar, mit welcher gewerbliche Spül- oder Waschmaschinen mit Reinigungsmittel versorgt werden. Diese Stammlauge wird in dem Unterteil 3 aufgefangen und bereitgehalten.

Bei der Vorrichtung la wird das angesaugte Pulver 6 nicht in der verlängerten Saugleitung 5 mit Wasser vermischt, sondern hier wird der aus dem Rohrbogen 29a austretende Pulverstrahl 51 von dem aufgefächert aus den Mündungsöffnungen 24a der Düsen 50 austretenden Wasserstrahl erfaßt und im Unterteil 3a niedergeschlagen.

Der bei der Vorrichtung 1 in dem Unterteil 3 angeordnete Siebboden 36 und der in dem Unterteil 3a der Vorrichtung la angeordnete Siebkorb 54 weisen eine Maschenweite von ca. 0,2 mm auf, so daß gröbere, noch nicht aufgelöste Pulverpartikel von dem Siebboden 36 bzw. dem Siebkorb 54 bis zu ihrer Auflösung zurückgehalten werden. Bei der Vorrichtung 1 sorgt die als Umwälzpumpe ausgebildete Tauchpumpe 27 in Verbindung mit den Abzweigungen 40 und 41 der Stammlaugenleitung 25 dafür, daß ständig Stammlauge in dem Behälter umgewälzt und damit ein Absetzen der noch ungelösten Pulverreinigerbestandteile auf dem Siebboden 36 verhindert und deren Auflösung beschleunigt wird. Bei der Vorrichtung la bewirkt dies der rotierende Rührpropeller 56.

Die in dem Unterteil 3 gebildete Stammlauge wird bei der Vorrichtung 1 am Boden 32 des Behälters 3 durch die Ansaugöffnung 37 der Pumpe 27 angesaugt und in die zweite Stammlaugenleitung 25 gepumpt. Beispielsweise ist außerhalb der Vorrichtung 1 innerhalb der Stammlaugenleitung 25 vor der jeweils zu versorgenden Spül- oder Waschmaschine ein Magnetventil angeordnet, welches von einer Leitfähigkeitsmeßsonde, die im Waschtank der Spül- oder Waschmaschine angeordnet ist, zur Versorgung der jeweiligen Maschine mit frischer Stammlauge dann geöffnet wird, wenn die Leitfähigkeitsmeßsonde eine Konzentrationsunterschreitung im Waschtank feststellt. Bei geschlossenem Magnetventil wird durch die Umwälzpumpe 27 lediglich Stammlauge innerhalb des Stammlaugenbehälters 2 umgewälzt. Bei der Vorrichtung la wird zur Versorgung angeschlossener Spül- oder Waschmaschinen dann Stammlauge aus dem Stammlaugenbehälter 2a entnommen, wenn die Membran- oder Schlauchquetschpumpe 61 in Gang gesetzt wird. Auch dies kann beispielsweise durch das Meßsignal einer in dem Waschtank einer Spül- oder Waschmaschine angeordneten Leitfähigkeitsmeßsonde ausgelöst werden.

Die Ansetzung und Aufbereitung der Stammlauge erfolgt bei beiden Vorrichtungen 1 und la chargenweise. Bei Erreichen des durch die untere Füllstandskontrollelektrode 42 festgestellten unteren Füllstandsniveaus der Stammlauge in dem jeweiligen Stammlaugenbehälter 2 bzw. 2a werden sowohl das Sauggebläse als auch der Frischwasserzufluß durch die Frischwasserleitung 23 gestartet. Bei Erreichen des mit Hilfe der oberen Füllstandskontrollelektrode 43 festgestellten oberen Füllstandsniveaus der Stammlauge in dem Stammlaugenbehälter 2 bzw. 2a wird bei beiden Vorrichtungen das Sauggebläse sofort abgeschaltet, wohingegen der Frischwasserzufluß noch ca. 3 bis 4 Sekunden aufrechterhalten wird, um zu erreichen, daß beim Auslaufen des Sauggebläses noch angesaugtes Pulver auch noch mit Wasser vermischt und damit eine Staubentwicklung innerhalb des Unterteiles 3 bzw. 3a vermieden wird. Die untere Füllstandskontrollelektrode 42 ist in solch einer Höhe angeordnet, daß ein Leerlaufen des Stammlaugenbehälters 2 bzw. 2a vermieden wird. Die obere Füllstandskontrollelektrode 43 ist in einer solchen Höhe angeordnet, daß keine Stammlauge in die Mündungsöffnung 33 bzw. 33a eintreten kann.

Der durch die Saugleitung 5 in den Stammlaugenbehälter 2 bzw. 2a angesaugte Pulverstrom und der durch die Mündungsöffnungen 24 bzw. 24a in den Stammlaugenbehälter 2 bzw. 2a eintretende Frischwasserzufluß sind mengenmäßig so aufeinander abgestimmt, daß die in dem Stammlaugenbehälter 2 bzw. 2a angesetzte Stammlauge eine Konzentration von etwa 50 bis 120 g/l aufweist. Eine Regelung ist über den Wasserzufluß und die Saugleistung des Sauggebläses, beispielsweise eine Taktung des Sauggebläsemotors, möglich. Bei der Vorrichtung la kann eine Regelung auch über eine unterschiedliche Anzahl von Düsen 50, eine Veränderung der Düsenaustrittsöffnung oder eine Veränderung des anstehenden Wasserdruckes, beispielsweise mittels zwischengeschalteter Druckminderer, erreicht werden. Zu diesem Zweck sind der Frischwasserleitung 23 vor Eintritt in das Unterteil 3 bzw. 3a ggf. ein Absperrhahn, ein Druckminderer mit Manometer für Regeldruck oder ein Drosselventil, ein Rohrtrenner und ein Magnetventil vorgeschaltet.

Darüber hinaus läßt sich die angesaugte Pulvermenge durch den, vorzugsweise verstellbaren, stegförmigen Strömungswiderstandskörper innerhalb des Saugrohres 17 in weiten Grenzen voreinstellen.

Das Ansetzen bzw. Zubereiten der Stammlauge bei der Vorrichtung 1 geschieht also dadurch, daß durch das Rohrstück 28 und den Rohrbogen 29 Pulver 6 angesaugt wird. In dem Rohrbogen 29 wird tangential Frischwasser zugeführt, das sich mit dem Pulver vermischt. Anschließend wird das Pulver/Wasser-Gemisch durch das weitere Rohrstück 30 vorzugsweise tangential schräg nach unten gerichtet aus der Mündungsöffnung 33 austretend an die Innenwand des Unterteils 3 geführt. Hierdurch wird ein Hochspritzen des austretenden Pulver/Wasser-Gemisches vermieden. Die Tauchpumpe 27 steht auf dem Behälterboden 32 auf und saugt durch ihre Ansaugöffnung 37 die in dem Unterteil 3 angesetzte Stammlauge, die sich durch Auflösung des Pulvers aus dem zugeführten Pulver/Wasser-Gemisch gebildet hat, an. Die Ansaugöffnung 37 der Tauchpumpe 27 ist unterhalb des Siebbodens 36 angeordnet. Der Siebboden 36 liegt oberseitig dicht auf der Unterseite einer an der Innenwand des Unterteils 3 umlaufend angeordneten Lippendichtung 62 an, so daß keine Pulverpartikel mit einer Korngröße größer 0,2 mm von der Pumpe 27 angesaugt werden können. Druckseitig fördert die Pumpe 27 die angesaugte Stammlauge in die Stammlaugenleitung 25, wobei sich diese oberhalb des Siebbodens 26 in dem Unterteil 3 verzweigt. Durch eine Abzweigung wird Stammlauge über die Leitung 25 aus dem Stammlaugenbehälter 2 hinaus und anschließend durch ein nicht dargestelltes Magnetventil hindurch zu der oder den gewerblichen Spül- oder Waschmaschinen gefördert. Durch die anderen beiden Abzweigungsleitungen 40 und 41 wird geförderte Stammlauge auf die Oberseite des Siebbodens 36 gerichtet. Die Mündungen der Abzweigungsleitungen 40 und 41 sind dabei tangential so auf den Siebboden 36 ausgerichtet, daß sich ein Rühr- bzw. Wirbeleffekt ergibt, der das Absetzen von noch ungelösten Reinigerbestandteilen auf dem Siebboden verhindert.

Bei der Vorrichtung 1a tritt der angesaugte Pulverstrom 6 durch den Rohrbogen 29a senkrecht nach unten geführt aus. Unmittelbar nach dem Austritt des Pulverstroms 51 aus dem Rohrbogen 29a treffen aus den radial nach innen und unten gerichteten Düsen 50 als Flachstrahlen austretende Wasserstrahlen auf den Pulverstrom 51 und schlagen das Pulver nieder. Das entstehende Pulver/Wasser-Gemisch wird in dem Siebkorb 54 aufgefangen. Durch Auflösen des Pulvers entsteht die Stammlauge. Die Stammlauge wird durch den Ablaßstutzen 60 aus dem Unterteil 3a abgesaugt, wobei durch die Maschenweite des Siebkorbes 54 sichergestellt ist, daß keine Pulverkörner mit einer Partikelgröße größer 0,2 mm aus dem Stammlaugenbehälter 2a austreten. Durch den Ablaßstutzen 60 hindurch wird die Stammlauge mittels der Schlauchquetschpumpe 61, oder ggf. einer Membranpumpe, aus dem Stammlaugenbehälter 21 abgesaugt und einer oder mehreren gewerblichen Spül- oder Waschmaschinen zugeführt.

Um ein problemloses Ansaugen des Pulvers 6 zu gewährleisten, ist die Saugleitung 5 mit der aus Saugrohr 17 und Mantelrohr 19 sowie Schutzkorb 22 gebildeten Sauglanze 21 versehen. Durch den Ringspalt 20 wird Luft zu dem als Ringdüse ausgebildeten Ende von Saugrohr 17 und Mantelrohr 19 angesaugt, wobei der Schutzkorb 22 ein zu tiefes Einsinken der Sauglanze 21 in das Pulver 6 verhindert sowie einen Freiraum zur Ausbildung einer das Pulver 6 aufwirbelnden (durch Pfeile 63 angedeutet) Wirbelzone schafft. Angesaugte Luft tritt in Pfeilrichtung 64 in den Ringspalt 20 ein. Das Pulver/Luft-Gemisch wird in Pfeilrichtung 65 durch das Saugrohr 17 in die Saugleitung 5 gesaugt.

Der stegförmige Strömungswiderstandskörper kann bis zu 80 % des Saugrohrquerschnittes ausfüllen. Er erlaubt die Regulierung der angesaugten Pulvermenge bei vorzugsweise hohen Saugleistungen, die ihrerseits Pulverablagerungen in der flexiblen Schlauchleitung verhindern.

Die Sauglanze 21 ist in Betriebsstellung in der Sauglanzenführung 15, die eine verkantungsfreie Führung der Sauglanze 21 gewährleistet, wenn diese während des Saugbetriebes nach und nach das in dem Sack 7 befindliche Pulver 6 absaugt, lose geführt gehalten.

Das an der Zugfeder 13 hängend an dem Tragarm 12 befestigte Halteelement 14 verhindert ein Zusammenfallen des Sackes 7 bei fortschreitender Entleerung und bewirkt zudem, daß die Sauglanzenspitze während des Saugbetriebes selbstgängig in die diametral gegenüberliegende Ecke des Sackboden wandert, wodurch eine vollständige Pulverentleerung des Sackes 7 sichergestellt wird.

## Patentansprüche

1. Vorrichtung (1, la) nach Art üblicher Naß-Staubsauger, bestehend aus einem ein bottichförmiges Unterteil (3, 3a) und ein darauf abdichtend aufgesetztes Oberteil (4, 4a) mit integriertem Sauggebläse zur Erzeugung eines Unterdrucks in dem Unterteil (3, 3a) aufweisenden Stammlaugenbehälter (2, 2a) mit aus dem Stammlaugenbehälter (2, 2a) herausführender und in ein Pulvergebinde (7) einzuführender Saugleitung (5),
dadurch gekennzeichnet,
daß die stammlaugenbehälterinnenseitige Mündungsöffnung (33, 33a) der Saugleitung (5) mit Abstand vom Eintrittsort der Saugleitung (5) in das Unterteil (3, 3a) angeordnet ist, daß in den Stammlaugenbehälter (2, 2a) eine Frischwasserleitung (23) mündet, deren Wasseraustrittsöffnung (24, 24a) auf einen durch die Saugleitung (5) zu führenden Pulverstrom gerichtet ist und daß der Stammlaugenbehälter (2, 2a) eine weitere, mit einer Pumpe (27, 61) in Wirkverbindung stehende und aus dem Stammlaugenbehälter (2, 2a) herausführende Stammlaugenleitung (25) mit behälterbodenseitigem Stammlaugenzufluß (26) zum Abpumpen der Stammlauge aus dem Unterteil (3, 3a) aufweist.

2. Vorrichtung nach Anspruch 1,
dadurch gekennzeichnet,
daß die stammlaugenbehälterinnenseitige Mündungsöffnung (33, 33a) der Saugleitung (5) unterhalb des Eintrittsortes der Saugleitung (5) in das Unterteil (3, 3a) und die stammlaugenbehälterinnenseitige Mündungsöffnung (24, 24a) der Frischwasserleitung (23) ebenfalls unterhalb des Eintrittsorts der Saugleitung (5) und/oder außerhalb der Saugleitung (5) angeordnet ist.

3. Vorrichtung nach einem der vorangehenden Ansprüche,
dadurch gekennzeichnet,
daß die Saugleitung (5) in stammlaugenbehälterinnenseitiger Verlängerung einen zum Behälterboden (32, 32a) nach unten gerichteten Bogen (29, 29a) oder Krümmer aufweist.

4. Vorrichtung nach Anspruch 3,
dadurch gekennzeichnet,
daß die Frischwasserleitung (23) in stammlaugenbehälterinnenseitiger Verlängerung mit in Richtung zum Behälterboden (32) ausgerichteter Austrittsöffnung (24) in den Bogen (29) mündet und sich die Saugleitung (5) an den Bogen (29) anschließend bis nahe an die Innenwand des Unterteils (3) fortsetzt.

5. Vorrichtung nach Anspruch 3,
dadurch gekennzeichnet,
daß die Saugleitung (5) in stammlaugenbehälterinnenseitiger Verlängerung in dem Bogen (29a) in der Längsachse des Unterteiles (3a) mit zum Behälterboden (32a) ausgerichteter Mündungsöffnung (33a) endet und oberhalb der Mündungsöffnung (33a) die Frischwasserleitung (23)in stammlaugenbehälterinnenseitiger Verlängerung als die Mündungsöffnung (33a) konzentrisch umgebende und aus vorzugsweise vier unter einem Neigungswinkel (α₂) von vorzugsweise 45° bei einer Flachstrahlauffächerung (α₁) von vorzugsweise 65° aus Düsen (50) einen auf den aus der Saugleitung (5) austretenden Pulverstrahl (51) gerichteten Wasserstrahl abgebende Ringleitung (49) ausgebildet ist.

6. Vorrichtung nach einem der vorangehenden Ansprüche,
dadurch gekennzeichnet,
daß unterhalb der stammlaugenbehälterinnenseitigen Mündungsöffnung (33, 33a) der Saugleitung (5) ein Siebboden (36, 36a) in dem Unterteil (3, 3a) angeordnet ist.

7. Vorrichtung nach einem der vorangehenden Ansprüche,
dadurch gekennzeichnet,
daß in dem Unterteil (3) eine Tauchpumpe (27) mit behälterbodenseitig unterhalb des Siebbodens (36) ausgebildeter Ansaugöffnung (37) und mit mit der Stammlaugenleitung (25) in Verbindung stehender druckseitiger Abgabeöffnung (38) ausgebildet ist.

8. Vorrichtung nach Anspruch 7,
dadurch gekennzeichnet,
daß die Stammlaugenleitung (25) Abzweigungen (40, 41) innerhalb des Unterteiles (3) aufweist, deren Mündungsöffnungen oberseitig auf den Siebboden (36) gerichtet sind.

9. Vorrichtung nach einem der Ansprüche 1 bis 6,
dadurch gekennzeichnet,
daß außerhalb des Stammlaugenbehälters (3a) in der Stammlaugenleitung (25) zumindest eine Pumpe (61), vorzugsweise eine Membran- oder Schlauchquetschpumpe, angeordnet ist.

10. Vorrichtung nach einem der vorangehenden Ansprüche,
dadurch gekennzeichnet,
daß in dem Stammlaugenbehälter (3a) oberhalb des Siebbodens (36, 36a) ein Rührpropeller (56) oder Rührstab rotierbar angeordnet ist.

11. Vorrichtung nach einem der vorangehenden Ansprüche,
dadurch gekennzeichnet,
daß das Unterteil (3a) bodenseitig einen Ablaßstutzen (60) mit angeschlossener Stammlaugenleitung (25) aufweist.

12. Vorrichtung nach einem der vorangehenden Ansprüche,
dadurch gekennzeichnet,
daß die Stammlaugenleitung (25) außerhalb des Stammlaugenbehälters (2, 2a) Abzweigungen zur Versorgung mehrerer Spül- oder Waschmaschinen aufweist.

13. Vorrichtung nach einem der vorangehenden Ansprüche,
dadurch gekennzeichnet,
daß an der Innenwand des Unterteils (3, 3a) zwei Füllstandskontrollelektroden (42, 43) angeordnet sind.

14. Vorrichtung nach einem der vorangehenden Ansprüche,
dadurch gekennzeichnet,
daß der Stammlaugenbehälter (2, 2a) auf einem Räder (44) und einen Handgriff (45) aufweisenden rollbaren Gestell (46) in Form einer Handkarre oder eines Handwagens angeordnet ist.

15. Vorrichtung nach Anspruch 14,
dadurch gekennzeichnet,
daß auf dem rollbaren Gestell (46) eine Netzkopplungseinrichtung (47) und elektrische Schalteinrichtungen (48) angeordnet sind.

16. Vorrichtung nach Anspruch 16 oder 17,
dadurch gekennzeichnet,
daß auf dem Gestell (46) die zumindest eine Pumpe (61) angeordnet ist.

17. Vorrichtung nach einem der vorangehenden Ansprüche,
dadurch gekennzeichnet,
daß die Saugleitung (5) flexibel, insbesondere als Schlauch, ausgebildet ist.

18. Vorrichtung nach einem der vorangehenden Ansprüche,
dadurch gekennzeichnet,
daß die Saugleitung (5) auf der stammlaugenbehälterabgewandten Seite in einem in das Pulvergebinde einzutauchenden Saugrohr (17) endet, welches von einem einen Ringspalt (20) zum Saugrohr (17) ausbildenden Mantelrohr (19) umgeben ist, welche zusammen eine saugöffnungsseitig in einer Ringdüse endende Sauglanze (21) ausbilden.

19. Vorrichtung nach Anspruch 18,
dadurch gekennzeichnet,
daß die Sauglanze (21) saugöffnungsseitig einen über das Ende des Saugrohres (17) überstehenden käfigartigen Schutzkorb (22) aufweist.

20. Vorrichtung nach Anspruch 18 oder 19,
dadurch gekennzeichnet,
daß das Saugrohr innenseitig an seinem unteren Ende einen Strömungswiderstandskörper aufweist.

## Claims

1. An arrangement (1;1a) on the lines of conventional wet vacuum cleaners consisting of a tub-like lower part (3;3a) and - sealingly mounted thereon - an upper part (4;4a) with an integrated suction blower for generating a reduced pressure in the stock liquor tank (2;2a) comprising the lower part (3;3a) with a suction line (5) leading from the stock liquor tank (2;2a) and intended to be introduced into a powder container (7), characterized in that the opening (33;33a) of the suction line (5) on the inside of the stock liquor tank is arranged at a distance from the point where the suction line (5) enters the lower part (3;3a), in that a fresh water line (23) opens into the stock liquor tank (2;2a), its water outlet opening (24;24a) being directed onto a stream of powder to be drawn through the suction line (5), and in that the stock liquor tank (2;2a) comprises another stock liquor line (25) operatively connected to a pump (27;61) and leading out from the stock liquor tank (2;2a) with a stock liquor inlet (26) in the base of the tank for pumping off the stock liquor from the lower part (3;3a).

2. An arrangement as claimed in claim 1, characterized in that the opening (33;33a) of the suction line (5) on the inside of the stock liquor tank is positioned below the point where the suction line (5) enters the lower part (3;3a) and the opening (24;24a) of the fresh water line (23) on the inside of the stock liquor tank is likewise positioned below the point of entry of the suction line (5) and/or outside the suction line (5).

3. An arrangement as claimed in any of the preceding claims, characterized in that the suction line (5) comprises an elbow or bend (29;29a) directed downwards towards the bottom (32;32a) of the stock liquor tank in an extension on the inside thereof.

4. An arrangement as claimed in claim 3, characterized in that, in an extension on the inside of the stock liquor tank with an outlet opening (24) directed towards the bottom (32) thereof, the fresh water line (23) opens into the bend (29) and, after the bend (29), the suction line (5) continues to a point situated close to the inner wall of the lower part (3).

5. An arrangement as claimed in claim 3, characterized in that, in its extension on the inside of the stock liquor tank with the bend (29a), the suction line (5) terminates in the longitudinal axis of the lower part (3a) with its opening (33a) directed towards the bottom (32a) of the tank and, in its extension on the inside of the stock liquor tank, the fresh water line (23) is formed above the opening (33a) by a ring line (49) concentrically surrounding the opening (33a) and delivering a jet of water directed onto the stream (51) of powder issuing from the suction line (5) from preferably four nozzles (50) inclined at an angle (α₂) of preferably 45° for a flat-jet opening angle (α₁) of preferably 65°.

6. An arrangement as claimed in any of the preceding claims, characterized in that a filter plate (36;36a) is arranged in the lower part (3;3a) below the opening (33;33a) of the suction line (5) on the inside of the stock liquor tank.

7. An arrangement as claimed in any of the preceding claims, characterized in that an immersion pump (27) with an intake opening (37) below the filter plate (36) towards the bottom of the tank and a delivery opening (38) communicating with the stock liquor line (25) on the pressure side is arranged in the lower part (3).

8. An arrangement as claimed in claim 7, characterized in that the stock liquor line (25) has branches (40;41) in the lower part (3) of which the openings are directed onto the top of the filter plate (36).

9. An arrangement as claimed in any of claims 1 to 6, characterized in that at least one pump (61), preferably in the form of a diaphragm pump or flow-inducing pump, is arranged in the stock liquor line (25) outside the stock liquor tank (3a).

10. An arrangement as claimed in any of the preceding claims, characterized in that a propeller stirrer (56) or stirring rod is rotatably mounted above the filter plate (36;36a) in the stock liquor tank (3a).

11. An arrangement as claimed in any of the preceding claims, characterized in that the base of the lower part (3a) comprises an outlet (60) with a stock liquor line (25) connected thereto.

12. An arrangement as claimed in any of the preceding claims, characterized in that the stock liquor line (25) comprises branches outside the stock liquor tank (2;2a) for supplying several dishwashing or washing machines.

13. An arrangement as claimed in any of the preceding claims, characterized in that two level control electrodes (42;43) are arranged on the inner wall of the lower part (3;3a).

14. An arrangement as claimed in any of the preceding claims, characterized in that the stock liquor tank (2;2a) is mounted on a frame (46) comprising wheels (44) and a handle (45) in the form of a handcart or trolley.

15. An arrangement as claimed in claim 14, characterized in that a mains coupling unit (47) and electrical switches (48) are arranged on the roller-mounted frame (46).

16. An arrangement as claimed in claim 16 or 17, characterized in that at least one pump (61) is mounted on the frame (46).

17. An arrangement as claimed in any of the preceding claims, characterized in that the suction line (5) is flexible and, more particularly, is in the form of a hose.

18. An arrangement as claimed in any of the preceding claims, characterized in that, on its side remote from the stock liquor tank, the suction line (5) terminates in a suction pipe (17) which dips into the powder container and which is surrounded by a tubular jacket (19) with an annular gap (20) in between, the suction pipe and the tubular jacket together forming a suction lance (21) terminating in an annular nozzle on the suction opening side.

19. An arrangement as claimed in claim 18, characterized in that, on the suction opening side, the suction lance (21) has a cage-like protective basket (22) projecting beyond the end of the suction pipe (17).

20. An arrangement as claimed in claim 18 or 19, characterized in that, on its inside, the suction pipe is provided at its lower end with a flow resistance element.

## Revendications

1. Dispositif (1, la) du type des aspirateurs de poussière par voie humide, consistant en un réservoir pour lessive de base (2, 2a), qui présente une partie inférieure (3, 3a) en forme de cuve et une partie supérieure (4, 4a) mise dessus de façon étanche avec une soufflante d'aspiration intégrée servant à produire une dépression dans la partie inférieure (3, 3a), avec une conduite d'aspiration (5) sortant du réservoir pour la lessive de base (2, 2a) et à introduire dans un colisage de poudre (7),
dispositif caractérisé en ce que
l'embouchure (33, 33a) de la conduite d'aspiration (5), qui est située du côté intérieur du réservoir pour la lessive de base, est disposée à une certaine distance du point d'entrée de la conduite d'aspiration (5) dans la partie inférieure (3, 3a), en ce que débouche dans le réservoir pour la lessive de base (2, 2a) une conduite d'eau fraîche (23), dont l'orifice de sortie de l'eau (24, 24a) est orienté en direction d'un écoulement de poudre à diriger à travers la conduite d'aspiration (5) et en ce que, le réservoir pour la lessive de base (2, 2a) présente une autre conduite de lessive de base (25) qui est en liaison avec une pompe (27, 61) et qui sort du réservoir pour la lessive de base (2, 2a), avec une arrivée de la lessive de base (26) qui est située du côté du fond du réservoir et qui sert à pomper la lessive de base à partir de la partie inférieure (3, 3a).

2. Dispositif selon la revendication 1,
caractérisé en ce que
l'embouchure (33, 33a), qui est située du côté intérieur du réservoir pour la lessive de base, de la conduite d'aspiration (5) est disposée en dessous du point d'entrée de la conduite d'aspiration (5) dans la partie inférieure (3, 3a) et l'embouchure (24, 24a), qui est située du côté intérieur du réservoir pour la lessive de base, de la conduite d'eau fraîche (23) est également disposée en dessous du point d'entrée de la conduite d'aspiration (5) et/ou en dehors de la conduite d'aspiration (5).

3. Dispositif selon l'une des revendications précédentes,
caractérisé en ce que
la conduite d'aspiration (5) présente dans un prolongement, qui est situé du côté intérieur du réservoir pour la lessive de base, un coude (29, 29a) ou partie coudée, orienté vers le bas en direction du fond du réservoir (32, 32a).

4. Dispositif selon la revendication 3,
caractérisé en ce que
la conduite d'eau fraîche (23) débouche dans un prolongement, qui est situé du côté intérieur du réservoir pour la lessive de base, avec un orifice de sortie (24) dans le coude (29), qui est orienté en direction du fond du réservoir (32) et en ce que la conduite d'aspiration (5), à la suite du coude (29), se prolonge presque jusqu'à la paroi intérieure de la partie inférieure (3).

5. Dispositif selon la revendication 3,
caractérisé en ce que
la conduite d'aspiration (5) se termine dans un prolongement, qui est situé du côté intérieur du réservoir pour la lessive de base, dans le coude (29a) dans l'axe longitudinal de la partie inférieure (3a) par un orifice d'embouchure (33a), orienté en direction du fond du réservoir (32a), et en ce que la conduite d'eau fraîche (23), au-dessus de l'orifice de l'embouchure (33a), dans un prolongement qui est situé du côté intérieur du réservoir pour la lessive de base, est réalisée comme une conduite annulaire (49) qui délivre un jet d'eau orienté en direction du jet de poudre (51) sortant de la conduite d'aspiration (5), qui entoure de façon concentrique l'orifice d'embouchure (33a) et comporte des buses (50) au nombre de préférence de quatre sous un angle d'inclinaison (α₂) de 45° de préférence dans le cas d'un étalement en éventail (α₁) de 65° de préférence.

6. Dispositif selon l'une des revendications précédentes
caractérisé en ce que
en dessous de l'orifice de l'embouchure (33, 33a) de la conduite d'aspiration (5), qui est situé du côté intérieur du réservoir pour la lessive de base, est disposé un tamis de fond (36, 36a) dans la partie inférieure (3, 3a).

7. Dispositif selon l'une des revendications précédentes
caractérisé en ce que
dans la partie inférieure (3) est constituée une pompe immergée (27) avec un orifice d'aspiration (37) constitué du côté du fond du réservoir, en dessous du tamis de fond (36), et avec un orifice de sortie (38) du côté sous pression, qui est en liaison avec la conduite de lessive de base (25).

8. Dispositif selon la revendication 7,
caractérisé en ce que
la conduite de lessive de base (25) présente des dérivations (40, 41) à l'intérieur de la partie inférieure (3), dont les orifices d'embouchure sont orientés du côté supérieur en direction du tamis de fond (36).

9. Dispositif selon l'une des revendications 1 à 6, caractérisé en ce que
en dehors du réservoir pour la lessive de base (3a), on dispose dans la conduite de lessive de base (25) au moins une pompe (61), de préférence une pompe à membrane ou une pompe péristaltique.

10. Dispositif selon l'une des revendications précédentes,
caractérisé en ce que
dans le réservoir pour la lessive de base (3a) on dispose au-dessus du tamis de fond (36, 36a) un agitateur à hélice (56) ou un bâton d'agitation qui peut tourner.

11. Dispositif selon l'une des revendications précédentes,
caractérisé en ce que
la partie inférieure (3a) présente du côté du fond un ajutage de sortie (60) raccordé à la conduite de lessive de base (25).

12. Dispositif selon l'une des revendications précédentes,
caractérisé en ce que
la conduite de lessive de base (25) présente, en dehors du réservoir pour la lessive de base (2, 2a), des dérivations qui servent à alimenter plusieurs machines à rincer ou à laver.

13. Dispositif selon l'une des revendications précédentes,
caractérisé en ce que
l'on dispose sur la paroi intérieure de la partie inférieure (3, 3a) deux électrodes de contrôle du niveau de remplissage (42, 43).

14. Dispositif selon l'une des revendications précédentes,
caractérisé en ce que
le réservoir pour la lessive de base (2, 2a) est disposé sur un jeu de roulettes (44) et un bâti (46) qui peut rouler et qui présente une poignée (45) et a la forme d'une charrette à bras ou d'un chariot à main.

15. Dispositif selon la revendication 14,
caractérisé en ce que
l'on dispose sur le bâti, qui peut rouler (46), un dispositif de raccordement au réseau électrique (47) et des systèmes de branchement électrique (48).

16. Dispositif selon la revendication 16 ou 17,
caractérisé en ce que
sur le bâti (46) on dispose au moins une pompe (61).

17. Dispositif selon l'une des revendications précédentes,
caractérisé en ce que
la conduite d'aspiration (5) est constituée de façon flexible, de préférence sous la forme d'un tuyau flexible.

18. Dispositif selon l'une des revendications précédentes,
caractérisé en ce que
la conduite d'aspiration (5) se termine du côté qui est situé à l'opposé du réservoir pour la lessive de base, par un tube d'aspiration (17) à faire plonger dans le colisage de poudre, tube d'aspiration (17) qui est entouré par un tube enveloppe (19) qui constitue une fente annulaire (20) par rapport au tube d'aspiration (17), tubes qui constituent ensemble une lance d'aspiration (21) se terminant par une buse annulaire du côté de l'orifice d'aspiration.

19. Dispositif selon la revendication 18, caractérisé en ce que la lance d'aspiration (21) présente du côté de l'orifice d'aspiration une corbeille de protection (22) du type cage qui dépasse l'extrémité du tube d'aspiration (17).

20. Dispositif selon la revendication 18 ou 19,
caractérisé en ce que
le tube d'aspiration présente à son extrémité inférieure un corps de résistance à l'écoulement.
